# EUROPEAN PATENT APPLICATION

(11) **EP 1 394 693 A1**
(43) Date of publication of application: **03.03.2004**
(21) Application number: 02360251.9
(22) Date of filing: 30.08.2002
(51) Int. Cl.: G06F 17/30

(54) **Method and browser for linking electronic documents**

(71) Applicant: ALCATEL, 75008 Paris (FR)
(72) Inventor: Wajda, Wieslawa, 75210 Keltern (DE)
(74) Representative: Urlichs, Stefan, Dipl.-Phys.

(57) **Abstract**

A new markup language command is provided, which allows to bind a referenced linked document (LD) into a master document (MD). When the user activates this control command, the browser embeds at least part of the content of the linked document (LD) into the master document (MD) and presents the compound document (CD) thus created to the user.

## Description

### Field of the Invention

The present invention relates to the field of Web browsing and more particular to a method and corresponding Web browser for linking two electronic documents and presenting them to a user.

### Background of the Invention

A Web browser is a computer program that allows an end-user to browse through a Web and display electronic documents therefrom. The term Web refers to a computer network such as the global Internet, a local Intranet or any other kind of computer network that contains servers holding remote electronic documents for download or viewing by the user. Typically, such electronic documents are written in a markup language such as the well-known Hypertext Markup Language (HTML) and contain further to the information to be displayed control commands for the browser. The browser interprets the control commands and displays the information accordingly.

The term browser is derived from the verb "to browse", which refers to the way a user may navigate through the Web. A basic feature of a markup language is the ability to create links between various documents. A link is graphically highlighted to the user and the user may activate such a link, which then brings him automatically to the linked document. Such links are also known as hyperlinks or anchors (a). The corresponding HTML commands are <LINK> and <A href>.

A hyperlink in an HTML document points to another electronic document by specifying only the resource or location, where the linked document is stored. If a hyperlink is activated (e.g. by a mouse click), the browser leaves the actual document and loads the referenced document. Thus, it is not possible using a simple hyperlink to display or print a master document with linked documents inserted (e.g. pictures or referenced HTML documents).

It is therefore an object of the present invention to provide a method and corresponding browser that allows the Web designer to create and link electronic documents in a more flexible manner.

### Summary of the Invention

These and other objects that appear below are achieved by a new markup language command which allows to bind a referenced document into a master document. When the user activates this control command, the browser embeds at least part of the content of the linked document into the master document and presents the compound document thus created to the user.

This new type of control command (or tag) allows the creation of more flexible markup language documents. A user has the opportunity to display and print the master document with or without the referenced document bound thereto. The invention therefore increases the options for document design. Further to that, the invention can be realized without much complex programming.

### Brief Description of the Drawings

A preferred embodiment of the present invention will now be described with reference to the accompanying drawings in which
figure 1 shows first and second electronic documents; and
figure 2 shows the second document bound into the first document.

### Detailed Description of the Invention

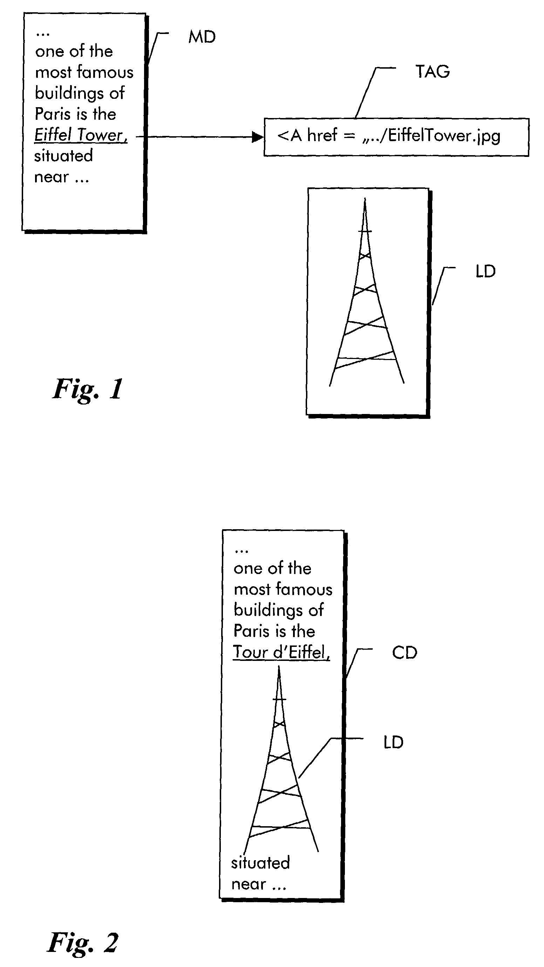

Figure 1 shows two electronic documents, as they will be displayed by a user's browser. A first master document MD is an HTML page that contains for instance a description of the French capital Paris. The document contains aside others the description "... one of the most famous buildings of Paris is the *Eiffel Tower*, situated near ...". The words *"Eiffel Tower"* are formatted as hyperlink using appropriate HTML control commands and this hyperlink points to a linked electronic document LD, which in the example is a picture of the Eiffel Tower in JPG format.

According to the prior art, such a link would be coded by the markup language control command TAG <A href=".../EifelTower.jpg", where "..." stands for the location where the pic file "EiffelTower.jpg" is stored. When the user clicks in his browser on the hyperlink, he is forwarded to the picture document, which is then displayed by his browser. He has thus to leave the master document MD to see the linked document LD. In order to allow the user to see the Eiffel Tower picture embedded into the master document, according to the prior art, complex programming in programming or script languages like Javascript or Java would be required.

However, according to the invention, a new type of control command is provided in the hypertext markup language in which the document MD is written. This new control command when activated by the user and executed by the browser binds the linked document into the master document. This leads to a compound document, which is then presented to the user. The new control command is called <JOIN> and its syntax and attributes are specified in the table below.

This new control command or HTML tag is now used to bind the picture of the Eiffel Tower into the master document MD when the user clicks on the link. The result is shown in figure 2. The linked document LD containing the picture is embedded into the master document right after the corresponding link location. This creates the compound document CD shown by figure 2.

It is important to note that the example does not only displays a picture embedded into an HTML page, which could also be done with the known <IMG> command, but that the content of the linked document is embedded into an existing page on user interaction, i.e., after the user checks the link. This means that by checking the link, the user creates with his browser an own new document (i.e., the compound document), which can also be printed thereafter. The invention is thus particularly useful when a user wants to print a master document together with all documents linked thereto in the context and order of the master document.

In this simple example, the entire content of the linked document LD, i.e., the picture of the Eiffel Tower, is embedded into the master document. However, in a more advanced improvement of the invention, the JOIN command can be used in conjunction with additional attributes which indicate the type and semantic of the binding, i.e., how the linked document shall be bound into the master document. For instance an additional attribute can define which part or parts of the linked document to embed.

The semantic information allows the Web designer to define the type of the binding and thus to achieve different effects such as compound presentation, stepwise inflate and deflate of documents, etc.

Furthermore, attributes can define that and how a browser binds the linked document in dependence of the current processing state. The browser can correlate information defined by these attributes with the present processing state of the master document and chose corresponding variants or presentation options of the linked document.

In another improvement, the user can be given the choice among several operations on the defined link categories. For example a user may perform any of the following operations:
- "Open all chapters";
- "Bind all links of the category A into the master document";
- "Bind all documents into the master document"; and
- "Interpret JOIN links as anchors".

The linked document can also be a markup language document and can also contain the JOIN tag described above. This leads to a tree-like binding of nested electronic documents on user interaction.

As the invention enriches known HTML by a new command, HTML browsers must be adapted to interpret and execute this new command. In addition, composers should also be able to generate this new control command if required. A composer is a computer program that allows creation of HTML documents in a similar manner as word processors or desktop publishing programs work, i.e., without hand-coding the various control commands. This is achieved by certain dialogues, menus or graphical widgets of the browser, which when selected by the user, automatically generate the corresponding markup language control commands in the electronic document. A composer supporting the invention must thus have a dialogue, menu entry, or widget that allows the designer to create a JOIN tag and its set of attributes as explained above.

Having understood the invention as described above, it should be clear to those skilled in the art, that various modifications and variations are possible. It should be especially clear that the invention does not necessarily require the creation of a completely new JOIN tag but that it would be possible in the same way to extend a known link or anchor tag with above functionality and the semantic interpretation. This would include for example to add an attribute to an existing link tag that, when set, means that the link command will be executed as join command according to the explanations above.

While the invention has been described by way of non-limiting example in the context of to the well-known hypertext markup language (HTML), nonetheless, it is clear to those skilled in the art, that the invention is equally applicable to other markup languages like XML (Extended Markup Language) and its derivates.

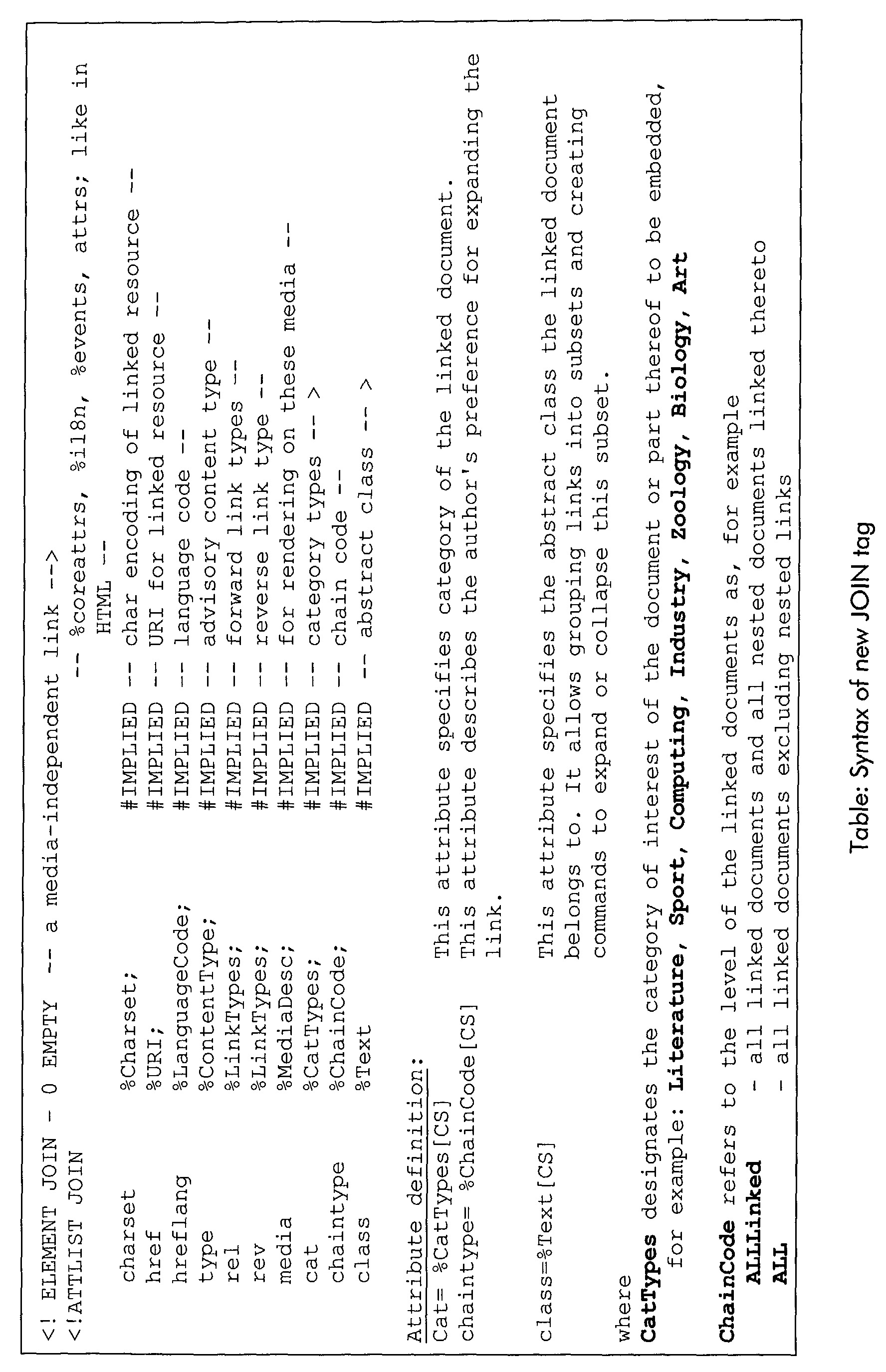

## Claims

1. A method of presenting a first electronic document (MD) and at least one second electronic document (LD) linked to said first electronic document (MD) to a user by means of a browser; said first electronic document (MD) being a markup language document and comprising a markup language control command adapted to bind said second electronic document (LD) into said first electronic document (MD) when activated by a user, said method comprising the steps of
- presenting said first electronic document (MD) to a user,
- upon activation of said control command by the user, embedding at least part of the content of said second electronic document (LD) into said first electronic document (MD) to create a compound electronic document (CD); and
- presenting said compound electronic document (CD) to the user.

2. A method according to claim 1, wherein said step of presenting said compound electronic document (CD) comprises the step of printing said document on a printer.

3. A method according to claim 1, wherein said control command comprises an attribute specifying the semantic and type of the binding.

4. A method according to claim 3, wherein said parameter specifying which parts of said second electronic document (LD) are to be embedded into said first document.

5. A method according to claim 1, wherein said second document being a markup language document comprising a markup language control command adapted to bind a third electronic document into said first electronic document when activated by the user.

6. A browser for presenting a first electronic document (MD) and at least one second electronic document (LD) linked to said first electronic document (MD) to a user, said first electronic document (MD) being a markup language document and comprising a markup language control command adapted to bind, when activated by a user, said second electronic document (LD) into said first electronic document (MD), said browser being programmed and adapted to present said first document (MD) to a user, to embed upon activation of said control command by the user at least part of the content of said second electronic document (LD) into said first electronic document (MD) to create a compound electronic document (CD), and to present said compound electronic document (CD) to the user.

7. An electronic markup language document (MD) comprising a markup language control command adapted to bind, when activated by a user, a second electronic document (LD) referenced by said control command into said markup language document (MD) by embedding at least part of the content of said second electronic document (LD) into said markup language document (MD) to create a compound electronic document (CD).

8. A composer for designing an electronic markup language document (MD), said composer being programmed and adapted to generate a markup language control command within said markup language document (MD), said control command being adapted to bind, when activated by a user, a second electronic document (LD) referenced by said control command into said markup language document (MD) by embedding at least part of the content of said second electronic document (LD) into said markup language document (MD) to create a compound electronic document (LD).
